# EUROPÄISCHE PATENTSCHRIFT

(11) **EP 0 654 208 B1**
(45) Veröffentlichungstag und Bekanntmachung des Hinweises auf die Patenterteilung: **17.03.1999**
(21) Anmeldenummer: 94117322.1
(22) Anmeldetag: 03.11.1994
(51) Int. Cl.: A01D 17/06, A01D 33/08, B07B 1/15

(54) **Vorrichtung zum Trennen von Steinen und/oder Erdfrüchten von Erdreich**
Apparatus for separating rookcrops from stones and ground
Dispositif pour séparer des tubercules des cailloux et de la terre

(30) Priorität: 22.11.1993 DE 4339510
(43) Veröffentlichungstag der Anmeldung: 24.05.1995
(73) Patentinhaber: Franz Grimme Landmaschinenfabrik GmbH & Co. KG., D-49401 Damme (DE)
(72) Erfinder: Kalverkamp, Klemens, D-59229 Ahlen (DE); Dettmer, Franz-Josef, D-49086 Osnabrück (DE)
(74) Vertreter: Busse & Busse Patentanwälte

(56) Entgegenhaltungen:
- DE-A- 3 027 651
- DE-B- 1 809 145
- FR-A- 1 228 425
- FR-A- 2 511 575

## Beschreibung

Die Erfindung bezieht sich auf eine Vorrichtung zum Trennen von Steinen und/oder Erdfrüchten von Erdreich gemäß dem Oberbegriff des Anspruchs 1.

Bei bekannten Vorrichtungen dieser Art (EP-0 410 807 A1, EP-0 410 808 A2, GB 754 400, US 2 670 846) sind die Trennwalzen mit ihren Achsen in einer Ebene oder in zwei zueinander winklig verlaufenden Ebenen angeordnet oder und zur Anpassung an unterschiedliche Bodenverhältnisse und gewünschte Trennergebnisse in und entgegen Beaufschlagungsrichtung innerhalb der Ebene verstellbar.

Der Erfindung liegt die Aufgabe zugrunde, eine Vorrichtung der genannten Art zu schaffen, die ein schnelleres und wirksameres Trennen der Steine, Kartoffeln od.dgl. Erdfrüchte von Erdreich und sonstigen Beimengungen, wie sie beispielsweise in einem aufgenommenen Bodendamm enthalten sind, ermöglicht.

Die Erfindung löst diese Aufgabe mit den Merkmalen des Anspruchs 1. Hinsichtlich wesentlicher weiterer Ausgestaltungen wird auf die Ansprüche 2 bis 16 verwiesen.

Die Höhenverstellbarkeit der Trennwalzen zueinander erzwingt ein Aufbrechen der in der Regel als Damm oder Teppich zugeführten Trennmasse mit der Folge, daß das aufgelockerte Erdreich schneller abgesiebt wird und die abzutrennenden stückigen Bestandteile wie Steine oder Feldfrüchte schneller und wirksamer von anhaftendem Erdreich befreit werden.

Bei einer Vorrichtung zum Trennen von Kraut von Kartoffeln (FR-A-1 228 452) bilden mit einer geschlossenen, elastischen Oberfläche versehene Krautzupfwalzen eine schräg abfallende Krauttrennstrecke, in der die Walzen quer zur Richtung der Beaufschlagung angeordnet, parallel zueinander ausgerichtet und paarweise gegensinnig umlaufend angetrieben sind. Dabei können die jeweils zweiten Walzen der Walzenpaare mittels Schwenkhebeln hochgeschwenkt werden, um durch zumindest horizontale Nebenordnung zur feststehenden Walze den Guttransport zu verlangsamen und so die Verweildauer des Trenngutes im Arbeitsbereich des Walzenpaares zu erhöhen.

In der Zeichnung ist ein Ausführungsbeispiel des Gegenstands der Erfindung schematisch näher veranschaulicht. In der Zeichnung zeigt:
- Fig. 1: eine Gesamtseitenansicht eines landwirtschaftlichem Arbeitsgerätes mit einer Trennvorrichtung nach der Erfindung,
- Fig. 2: eine vergrößerte Darstellung der Trennvorrichtung mit einer Anordnung der Trennwalzen in einer gemeinsamen Ebene,
- Fig. 3: eine Darstellung der Trennvorrichtung ähnlich Fig. 2 zur Veranschaulichung der Trennwalzen in einer höhenverstellten Arbeitsstellung,

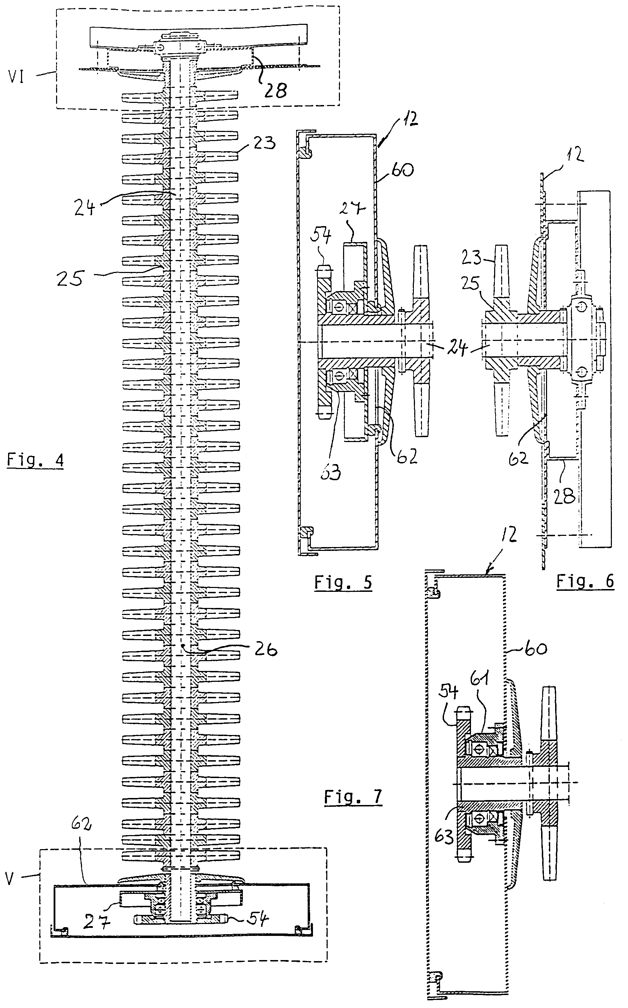

- Fig. 4: einen Schnitt durch eine höhenverstellbare Trennwalze und deren Abstützung in einem Vorrichtungsgehäuse,
- Fig. 5: eine vergrößerte Darstellung des Ausschnitts V in Fig. 4,
- Fig. 6: eine vergrößerte Darstellung des Ausschnitts VI in Fig. 4, und
- Fig. 7: eine Darstellung ähnlich Fig. 5 zur Veranschaulichung der Abstützung einer in der Höhe ortsfest abgestützten Trennwalze.

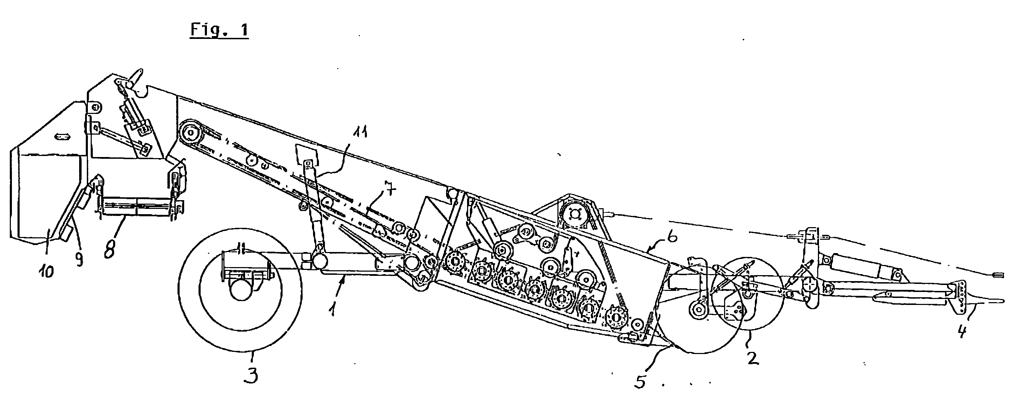

Fig. 1 veranschaulicht als Beispiel für die Einsatzmöglichkeiten der erfindungsgemäßen Trennvorrichtung ein verfahrbares landwirtschaftliches Arbeitsgerät 1, das sich über eine vordere Tastrolle 2 und rückwärtige Laufräder 3 auf dem Boden abstützt und mittels einer Deichsel 4 an ein Zugfahrzeug anhängbar ist.

Das Arbeitsgerät 1 weist eine Aufnahmevorrichtung 5 in Gestalt eines Rodeschars auf, an die sich die erfindungsgemäße Trennvorrichtung 6 anschließt. Der Trennvorrichtung ist ein Siebförderband 7 nachgeordnet, dem seinerseits ein Seitenförderer 8 nachgeordnet ist. Dieser Seitenförderer 8 kann von einem einhängbaren Überleitrost 9 übergriffen sein, dem ein Bunker 10 für große Steine oder große Erdfrüchte nachgeordnet ist. Kleine Steine oder Erdfrüchte, die durch den Überleitrost 9 hindurch auf den Seitenförderer 8 gelangen, werden von diesem zu einer Geräteseite hin transportiert und auf den Boden abgeworfen. Statt dessen können die den Seitenförderer 8 erreichenden Teile auch von diesem in einen nebenherfahrenden Sammelbehälter eingeworfen werden.

Die erfindungsgemäße Trennvorrichtung 6 hat innerhalb des Arbeitsgerätes 1 eine Schrägstellung, die mittels eines Stellantriebes 11 veränderbar ist, der die Höhenlage der rückwärtigen Laufräder 3 verstellt. In anderen Anwendungsfällen kann jedoch auch eine Stellvorrichtung vorgesehen sein, deren Stellwirkung sich auf die Vorrichtung 6 beschränkt.

Ein Arbeitsgerät der vorstehend beschriebenen und in Fig. 1 dargestellten Art ist insbesondere zum Trennen von Steinen von Erdreich geeignet. Die erfindungsgemäße Trennvorrichtung kann jedoch auch zum Trennen von Erdfrüchten wie insbesondere Kartoffeln von Beimengungen wie Erdreich, Kluten, Kraut etc., wie sie üblicherweise Bestandteil eines ausgehobenen Bodendamms oder -teppichs bilden, eingesetzt werden, beispielsweise als Bestandteil von Kartoffelernte-oder Kartoffelvollerntemaschinen.

Die Trennvorrichtung umfaßt im einzelnen ein Vorrichtungsgehäuse 12 und eine Anzahl von Trennwalzen, im vorliegenden Beispiel 7 Trennwalzen 13,14,15,16,17,18,19, die quer zur Richtung 20 der Beaufschlagung der Vorrichtung 6 mit ausgehobenem Erdreich im Abstand hintereinander angeordnet, parallel zueinander ausgerichtet und untereinander gleichsinnig in Richtung des Pfeiles 21 umlaufend angetrieben sind.

Die Trennwalzen 13 - 19 sind als sog. Stern- oder Fingerwalzen mit annähernd radial ausgerichteten Fingern 23 ausgebildet, die in jeweils auf Lücke zueinander von Trennwalze zu Trennwalze axial versetzten Ebenen umlaufen. Jede Trennwalze 13 - 19 umfaßt dabei eine Mehrkantwelle 24, bei dem dargestellten Beispiel eine Vierkantwelle, und auf dieser aneinandergrenzend aufgereihte Sternkörper 25, die beispielsweise aus Metall, Kunststoff oder Kunstharz gegossen oder auch aus einer Gummimischung hergestellt sein können.

Die Trennwalzen 13 - 19 sind zueinander in der Höhe verstellbar. Die Höhenverstellbarkeit kann auf jede geeignete konstruktive Weise verwirklicht sein. Beispielsweise können die Lager der Trennwalzen 13 - 19 einzeln am Vorrichtungsgehäuse 12 höhenverstellbar abgestützt sein. Statt dessen ist es auch möglich, eine gruppenweise Höhenverstellung vorzusehen, wie sie bei dem dargestellten Ausführungsbeispiel verwirklicht ist.

Darüber hinaus können die Abstände zwischen den Achsen 26 der Trennwalzen 13 - 19 in und entgegen Beaufschlagungsrichtung 20 der Vorrichtung 6 verstellbar sein, und zwar entweder mit Hilfe von Einzelverstellvorrichtungen oder im Wege einer gruppenweisen Verstellung, wie sie das dargestellte Ausführungsbeispiel veranschaulicht. Dabei kann die Verstellung des Abstandes zwischen den Achsen 26 der Trennwalzen 13 - 19 von der Höhenverstellbarkeit der Trennwalzen 13 - 19 unabhängig sein. Es besteht jedoch auch die Möglichkeit, eine kombinierte Höhen- und Abstandsverstellbarkeit vorzusehen.

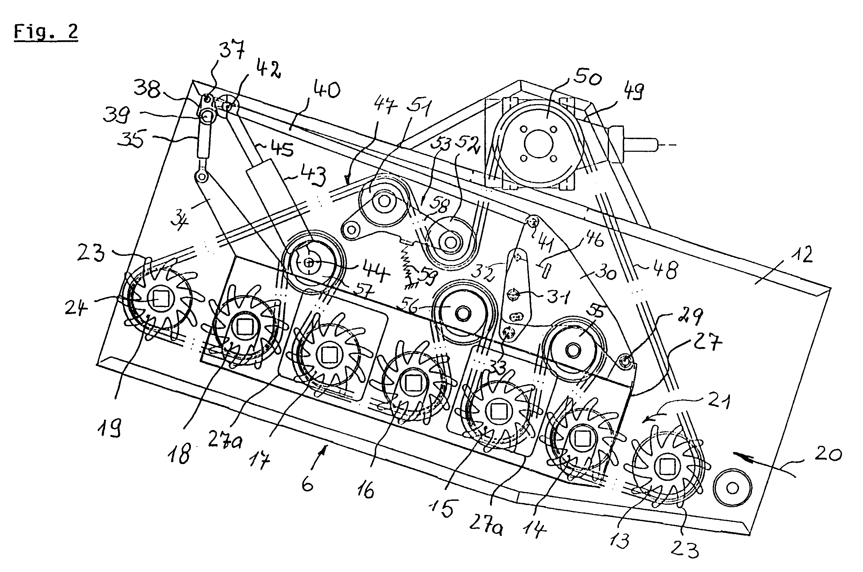

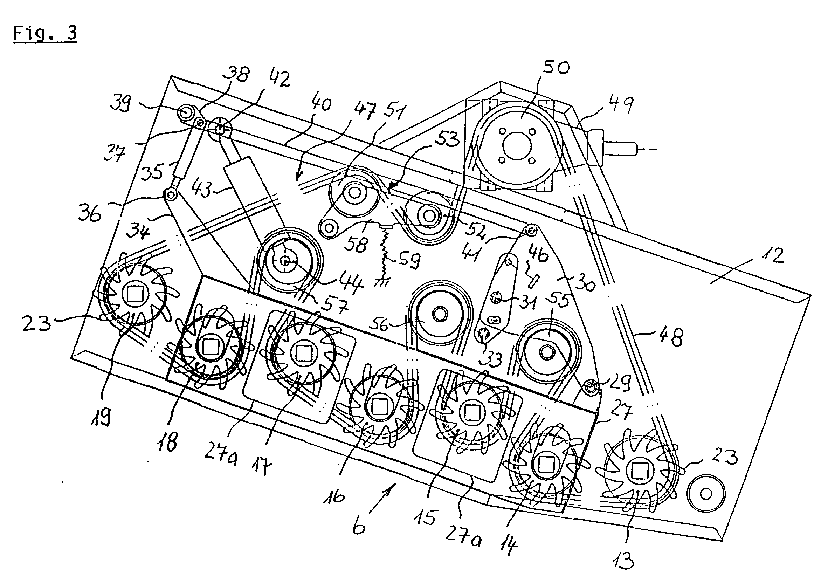

Bei der in Fig. 2 und 3 dargestellten Ausführung sind in der mit der Beaufschlagungsrichtung 20 der Vorrichtung 6 übereinstimmenden Reihenfolge der Trennwalzen 13 - 19 die gradzahligen Trennwalzen 14,16 und 18 höhenverstellbar abgestützt, während die ungradzahligen Trennwalzen 13,15,17 und 19 in Höhenrichtung und - bei dem dargestellten Beispiel auch in der Beaufschlagungsrichtung 20 - ortsfest vom Vorrichtungsgehäuse 12 getragen sind.

Die verstellbaren Trennwalzen 14, 16, 18 sind endseitig jeweils an einem gemeinsamen Stellglied 27,28 gelagert und gemeinsam in der Höhe und/oder im Abstand ihrer Achsen 26 zu denen der ungradzahligen Trennwalzen 13,15,17,19 verstellbar. Die Stellglieder 27,28 sind im Bereich der Trennwalzen 15,17 mit Ausnehmungen 27a versehen, die eine Höhenverstellung zulassen.

Die Höhenverstellung der Trennwalzen 13 - 19 kann jeweils beispielsweise von einer Mittelstellung ausgehend in Richtung nach oben und unten vorgenommen werden. Bei dem dargestellten Ausführungsbeispiel sind die verstellbaren Trennwalzen 14,16,18 aus einer mit den ortsfest abgestützten Trennwalzen 13,15,17,19 gemeinsamen Ebene, die sie in Fig. 2 einnehmen, abwärts verlagerbar, was durch eine gerade Verschiebebewegung der Stellglieder 27,28 in Richtung quer zur Beaufschlagungsrichtung 20 herbeigeführt werden kann. Hierfür genügen beispielsweise einfache am Vorrichtungsgehäuse 12 abgestützte mechanische oder hydraulische Stellglieder.

Darüber hinaus ist bei dem dargestellten Ausführungsbeispiel aber auch vorgesehen, daß die verstellbaren Trennwalzen 14,16,18 nacheinander, und zwar beginnend mit der in Beaufschlagungsrichtung 20 der Vorrichtung 6 zweiten Trennwalze 14, in der Höhe verstellbar sind. Diese Reihenfolge der Vornahme einer Höhenverstellung vermeidet einen abrupten Übergang von einem Trennvorgang, der von in einer Ebene gelegenen Trennwalzen 13 - 19 vorgenommen wird, zu einem Trennvorgang, bei dem die herangeführte damm-, teppich- oder schichfförmige Boden- oder Trennmasse in eine Berg- und Talbewegung versetzt wird. Der sanfte Übergang durch aufeinanderfolgendes Verstellen der Trennwalzen 14,16,18 in der Höhe führt zu einem allmählichen und fortschreitenden Aufbrechen der zugeführten Bodenformation und vermeidet Beschädigungen sowie bereichsweise Überlastungen.

Zur Durchführung der gewünschten Verstellungen sind die Stellglieder 27,28 jeweils über ein Hebelgestänge betätigbar, das eine gleiche Ausführung für das Stellglied 27 und für das Stellglied 28 aufweist und im nachfolgenden in Verbindung mit dem Stellglied 27 beschrieben wird. Im einzelnen umfaßt das Hebelgestänge einen bei 29 gelenkig am Stellglied 27 angreifenden Hebel 30, der ferner gelenkig bei 31 an einem weiteren Hebel 32 abgestützt ist. Dieser weitere Hebel 32 ist bei 33 gelenkig am gleichseitigen Wandungsteil des Vorrichtungsgehäuses 12 abgestützt. An einem rückwärtigen Ansatz 34 am Stellglied 27 greift bei 36 ein längenveränderlicher Lenker, beispielsweise eine Gewindespindel, gelenkig an, der mit seinem anderen Ende bei 37 gelenkig mit einem Hebel 38 verbunden ist, der schwenkbar von dem Vorrichtungsgehäuse 12 getragen ist. Mit dem Hebel 38 ist bei 37 auch noch eine Stellstange 40 gelenkig verbunden, die bei 41 am Hebel 30 gelenkig angreift. Bei 42 greift gelenkig ein Druckmittelantrieb 43 an der Stellstange 40 an, der bei 44 schwenkbar mit dem Vorrichtungsgehäuse 12 verbunden ist.

Wird ausgehend von der Stellung der Teile in Fig. 2 der Druckmittelantrieb 43, an dessen Stelle auch jeder andere geeignete Stellantrieb Verwendung finden kann, im Sinne eines Einfahrens seiner Kolbenstange 45 betätigt, so verschwenkt der Hebel 38 im Uhrzeigersinn nach rechts auf einer Kreisbahn, die im Anfangsteil der Bewegung der Stellstange 40 eine Verlagerung weitgehend parallel zu sich selbst in Fig. 2 in Richtung nach rechts erteilt und erst im zweiten Teil der Bewegung eine Abwärtsbewegung des Gelenkpunktes 37 zur Folge hat. Dementsprechend führt zu Anfang der Stellbewegung der Hebel 30 eine Verschwenkung um den Gelenkpunkt 31 im Uhrzeigersinne aus, wodurch sich der Gelenkpunkt 29 absenkt und damit dem vorderen Ende des Stellglieder 27,28 eine Abwärtsbewegung vermittelt. Im Zuge der weiteren Verstellbewegung erfährt dann auch das rückwärtige Ende der Stellglieder 27,28 eine Abwärtsbewegung und gelangen in die in Fig. 3 veranschaulichte Stellung, in der die nacheinander abgesenkten Trennwalzen 14,16,18 ihre höhenverstellte Endstellung erreicht haben.

Die Oberflächen der Trennwalzen 13 - 19 definieren nun eine berg- und talähnliche Bewegungsbahn, die eine gründliche Auflockerung der zugeführten Formation und eine verstärkte Absiebung des Erdreiches und sonstiger abzusiebender Bestandteile herbeiführt.

Mit Hilfe der Stellglieder 27,28 sind auch die Abstände der verstellbaren Trennwalzen 14,16,18 gemeinschaftlich verstellbar, zugleich dabei jedoch unabhängig von der Höheneinstellung. Hierzu ist der Hebel 32 mittels eines Stellantriebs 46 um den Schwenkpunkt 33 in bzw. entgegen Uhrzeigersinn verschwenkbar mit der Folge, daß sich bei einem Verschwenken in Fig. 2 bzw. 3 im Uhrzeigersinn die Stellglieder 27,28 nach rechts, d.h. entgegen Beaufschlagungsrichtung 20 der Vorrichtung 6, verlagern und dementsprechend die Achsabstände zwischen den Achsen 26 der Walzen 13,14 bzw. 15,16 bzw. 17,18 verringert und der Achsabstand zwischen den Trennwalzen 14,15 bzw. 16,17 bzw. 18,19 vergrößert wird. Eine entsprechend gegensätzliche Veränderung findet bei einer Verschwenkung des Hebels 32 im Gegenuhrzeigersinn um den Gelenkpunkt 33 statt.

Je nach Bemessung der Durchmesser der Trennwalzen, die beispielsweise gruppenweise unterschiedliche Durchmesser haben können, kann durch die Achsverstellung unabhängig von oder in Verbindung mit einer Höhenverstellung herbeigeführt werden, daß sämtliche Trennwalzen mit ihren Fingern einander überlappende Bewegungsbahnen durchlaufen, die Überlappung der Bewegungsbahnen auf zusammenwirkende Paare von Trennwalzen beschränkt ist oder die Bewegungsbahnen sämtlicher Trennwalzen einander berühren oder einen Abstand zueinander haben. Mit der Achsabstandsverstellung kann nicht nur das Trennergebnis durch Verstärkung oder Verringerung der Absiebung beeinflußt werden, sondern es kann auch eine verschleißbedingte Durchmesserveränderung der Trennwalzen ausgeglichen werden.

Zum Antrieb der Trennwalzen 13 - 19 ist ein gemeinsamer Kettentrieb 47 vorgesehen. Dessen Antriebskette 48 umläuft ein von einem Zentralgetriebe 49 angetriebenes Kettenrad 50, Kettenräder 51,52 einer Ausgleichs- und Spannvorrichtung 53 sowie ein Antriebsrad 54 auf jeder Mehrkantwelle 24. Zwischen den Trennwalzen 14,15 bzw. 15,16 bzw. 17,18 umläuft die Kette 48 auch noch Umlenkräder 55,56 bzw. 57. Die Ausgleichs- und Spannvorrichtung 53 mit ihrer Schwinge 58 und deren Vorbelastung durch eine Feder 59 sichert eine gleichbleibende Kettenspannung in allen Arbeitsstellungen der Trennwalzen 13 - 19. Dabei ist der Kettentrieb bereichsweise in einem als Kastenkörper 60 ausgebildeten Teil des Vorrichtungsgehäuses 12 gekapselt geführt und kann in diesem ein Ölbad durchlaufen.

Die ungradzahligen Trennwalzen 13,15,17,19 sind mit ihren kettentriebseitigen Lagern 61 direkt am kastenförmigen Teil 60 des Vorrichtungsgehäuses 12 befestigt, der auf seiner den Trennwalzen 13-19 zugewandten Seite im Bereich der höhenverstellbaren Trennwalzen 14,16,18 jeweils mit Durchgangsöffnungen 62 versehen ist, die eine Höhenverstellung zulassen.

Das dem Kettentrieb 47 zugewandte Ende der Mehrkantwelle 26 der Trennwalzen 13 - 19 ist in eine Lagerbüchse 63 der kettentriebseitigen Lager eingeschoben, so daß sie zur Demontage einer jeweiligen Trennwalze zu der dem Kettentrieb 47 abgewandten Seite hin aus der Trennvorrichtung 6 herausziehbar ist.

Die Höheneinstellung kann während des Betriebs unverändert bleiben, ist jedoch auch während des Betriebs veränderbar, beispielsweise durch eine Bedienungsperson oder auch durch einen Regler, der in Abhängigkeit von vorgegebenen Parametern wie beispielsweise der Restschichtdicke am Ende der Trennstrecke der Vorrichtung 6 oder des Siebförderbandes 7 die Höheneinstellung zur Verstärkung oder Minderung der Absiebleistung verändert.

## Patentansprüche

1. Vorrichtung (6) zum Trennen von Steinen und/oder Erdfrüchten von Erdreich, mit einer Anzahl von Trennwalzen (13-19), die quer zur Richtung (20) der Beaufschlagung der Vorrichtung (6) mit ausgehobenem Erdreich im Abstand hintereinander angeordnet, parallel zueinander ausgerichtet, untereinander gleichsinnig umlaufend angetrieben und als Sternwalzen mit annähernd radial ausgerichteten Fingern (23) ausgebildet sind, die in jeweils auf Lücke zueinander von Trennwalze zu Trennwalze axial versetzten Ebenen umlaufen, **dadurch gekennzeichnet,** daß die Trennwalzen (13-19) zueinander in der Höhe verstellbar sind.

2. Vorrichtung nach Anspruch 1, **dadurch gekennzeichnet,** daß der Abstand zwischen den Achsen (26) der Trennwalzen (13-19) in und entgegen Beaufschlagungsrichtung (20) der Vorrichtung (6) verstellbar ist.

3. Vorrichtung nach Anspruch 1 oder 2, **dadurch gekennzeichnet,** daß in der mit der Beaufschlagungsrichtung (20) der Vorrichtung (6) übereinstimmenden Reihenfolge der Trennwalzen (13-19) die gradzahligen Trennwalzen (14,16,18) verstellbar abgestützt sind.

4. Vorrichtung nach einem der Ansprüche 1 bis 3, **dadurch gekennzeichnet,** daß die verstellbaren Trennwalzen (14,16,18) endseitig jeweils an einem gemeinsamen Stellglied (27,28) gelagert und gemeinsam in der Höhe und/oder im Abstand ihrer Achsen zu denen der ungradzahligen Trennwalzen (13,15,17,19) verstellbar sind.

5. Vorrichtung nach einem der Ansprüche 1 bis 4, **dadurch gekennzeichnet,** daß zu ihrer Höhenverstellung die verstellbaren Trennwalzen (14,16,18) aus einer mit den ortsfest abgestützten Trennwalzen (13,15,17,19) gemeinsamen Ebene abwärts verlagerbar sind.

6. Vorrichtung nach einem der Ansprüche 1 bis 5, **dadurch gekennzeichnet,** daß die verstellbaren Trennwalzen (14,16,18) nacheinander beginnend mit der in Beaufschlagungsrichtung (20) der Vorrichtung (6) zweiten Trennwalze (14) in der Höhe verstellbar sind.

7. Vorrichtung nach Anspruch 3 und 6, **dadurch gekennzeichnet,** daß der Abstand der Achsen (26) der gradzahligen Trennwalzen (14,16,18) zu denen der ungradzahligen Trennwalzen (13,15,17,19) in und entgegen Beaufschlagungsrichtung (20) der Vorrichtung (6) mittels der Stellglieder (27,28) gemeinsam jedoch unabhängig von einer Höhenverstellung verstellbar ist.

8. Vorrichtung nach einem der Ansprüche 1,2,4,5 oder 6, **dadurch gekennzeichnet,** daß die gradzahligen und/oder die ungradzahligen Trennwalzen (13-19) einzeln in und entgegen Beaufschlagungsrichtung (20) der Vorrichtung (6) verstellbar abgestützt sind.

9. Vorrichtung nach einem der Ansprüche 1 bis 8, **dadurch gekennzeichnet,** daß der Neigungswinkel der Vorrichtung (6) zur Bodenebene einstellbar ist.

10. Vorrichtung nach einem der Ansprüche 1 bis 9, **dadurch gekennzeichnet,** daß ein für sämtliche Trennwalzen (13-19) gemeinsamer Kettentrieb (47) mit Ausgleichs- und Spannvorrichtung (53) vorgesehen ist.

11. Vorrichtung nach Anspruch 10, **dadurch gekennzeichnet,** daß der Kettentrieb (47) in einem als Kastenkörper ausgebildeten Teil eines Vorrichtungsgehäuses (12) gekapselt geführt ist.

12. Vorrichtung nach einem der Ansprüche 1 bis 11, **dadurch gekennzeichnet,** daß sie Bestandteil eines verfahrbaren Arbeitsgerätes (1) bildet, das eine den Trennwalzen vorgeordnete Aufnahmevorrichtung (5) für Erdreich aufweist.

13. Vorrichtung nach Anspruch 12, **dadurch gekennzeichnet,** daß das Arbeitsgerät (1) ein den Trennwalzen nachgeordnetes Siebband (7) umfaßt.

14. Vorrichtung nach Anspruch 13, **dadurch gekennzeichnet,** daß dem Siebband (7) des Arbeitsgerätes (1) ein Seitenförderer (8), ein diesen übergreifender Überleitrost (9) und letzterem ein Bunker (10) nachgeordnet ist.

15. Vorrichtung nach einem der Ansprüche 1 bis 14, **dadurch gekennzeichnet,** daß jede Trennwalze (13-19) eine Mehrkantwelle (24) und auf dieser aneinandergrenzend aufgereihte Sternkörper (25) umfaßt.

16. Vorrichtung nach Anspruch 15, **dadurch gekennzeichnet,** daß das Ende der Mehrkantwelle (24) der Trennwalzen (13-19) auf der Kettentriebseite der Vorrichtung (6) in eine Lagerbuchse (63) eingeschoben ist und zur Demontage einer Trennwalze aus dieser zu der dem Kettentrieb (47) abgewandten Seite hin herausziehbar ist.

## Claims

1. An apparatus (6) for separating stones and/or root crops from earth, with a number of separating rollers (13 to 19) disposed serially and at intervals from one another crosswise to the direction (20) in which excavated earth is fed to the apparatus (6), the said rollers being orientated parallel with one another and being driven to rotate in the same direction as one another, being constructed as toothed rollers having approximately radially orientated lingers (23) which respectively rotate in planes which are axially offset and staggered in respect of one another from one separating roller to the next, characterised in that the separating rollers (13 to 19) can be adjusted vertically in respect of one another.

2. An apparatus according to claim 1, characterised in that the interval between the axes (23) of the separating rollers (13 to 19) can be adjusted in and against the direction (20) in which the apparatus (6) is fed.

3. An apparatus according to claim 1 or 2, characterised in that the even-numbered separating rollers (14, 16, 18) are supported in such a way as to be adjustable in the sequence of separating rollers (13 to 19) which coincides with the direction (20) in which the apparatus (6) is fed.

4. An apparatus according to one of claims 1 to 3, characterised in that the adjustable separating rollers (14, 16, 18) are at their ends respectively mounted on a common positioning member (27, 28) and can be adjusted jointly in height and/or distance between their axes in relation to those of the odd-numbered separating rollers (13, 15, 17, 19).

5. An apparatus according to one of claims 1 to 4, characterised in that for their vertical adjustment, the adjustable separating rollers (14, 16, 18) can be displaced downwards out of a plane common with the rigidly supported separating rollers (13, 15, 17, 19).

6. An apparatus according to one of claims 1 to 5, characterised in that starting with the separating roller (14) which is second in the direction (20) in which the apparatus (6) is fed, the adjustable separating rollers (14, 16, 18) can be vertically adjusted.

7. An apparatus according to claim 3 and 6, characterised in that by means of the Positioning members (27, 28), it is possible for the distance between the axes (26) of the even-numbered separating rollers in relation to those of the odd-numbered separating rollers (13, 15, 17, 19) to be adjusted jointly in and against the direction (20) in which the apparatus (6) is fed, but independently of any vertical adjustment.

8. An apparatus according to one of claims 1, 2, 4, 5 or 6, characterised in that the even-numbered and/or the odd-numbered separating rollers (13 to 19) are supported to be adjustable individually in and against the direction (20) in which the apparatus (6) is fed.

9. An apparatus according to one of claims 1 to 8, characterised in that the angle of inclination of the apparatus (6) is adjustable in relation to ground level.

10. An apparatus according to one of claims 1 to 9, characterised in that a chain transmission (47) common to all separating rollers (13 to 19) is provided with a compensating and tensioning device (53).

11. An apparatus according to claim 10, characterised in that the chain transmission (47) is guided in encapsulated manner in a part of an apparatus housing (12) which is constructed as a box member.

12. An apparatus according to one of claims 1 to 11, characterised in that it forms a constituent part of a mobile working appliance (1) which has an earth-receiving means (5) upstream of the separating rollers.

13. An apparatus according to claim 12, characterised in that the working appliance (1) comprises a screening belt (7) downstream of the separating rollers.

14. An apparatus according to claim 13, characterised in that downstream of the screening belt (7) of the working appliance (1) there is a lateral conveyor (8), a transfer grid (9) engaging over this latter and a bin (10) on the downstream side of the grid (9).

15. An apparatus according to one of claims 1 to 14, characterised in that each separating roller (13 to 19) comprises a polygonal shaft (24) and stellate members (25) arranged adjacent one another on the said shaft (24).

16. An apparatus according to claim 15, characterised in that the end of the polygonal shaft (24) of the separating rollers (13 to 19) on the chain transmission side of the apparatus (6) is pushed into a bearing socket (63) and can be withdrawn therefrom towards the side remote from the chain transmission (47) for dismantling purposes.

## Revendications

1. Dispositif (6) pour séparer des cailloux et/ou des tubercules de la terre, comprenant un certain nombre de tambours séparateurs (13-19) disposés transversalement à la direction (20) d'action du dispositif (6), les uns derrière les autres, à distance, par rapport à la terre dégagée, ces tambours étant entraînés en rotation dans le même sens les uns par rapport aux autres et ils sont constitués par des tambours à étoiles avec des doigts (23) alignés sensiblement dans la direction radiale, ces doigts décrivant des plans décalés axialement d'un tambour séparateur à l'autre pour se trouver dans l'intervalle, caractérisé en ce que les tambours séparateurs (13-19) sont réglables en hauteur.

2. Dispositif selon la revendication 1,
caractérisé en ce que
la distance entre les axes (26) des tambours séparateurs (13-19) est réglable dans la direction d'action (20) du dispositif (6) et dans la direction opposée.

3. Dispositif selon les revendications 1 ou 2,
caractérisé en ce que
dans l'ordre des tambours séparateurs (13-19) qui se correspondent dans la direction d'action (20) du dispositif (6), les tambours séparateurs (14, 16, 18) d'ordre pair sont montés de manière réglable.

4. Dispositif selon l'une quelconque des revendications 1 à 3,
caractérisé en ce que
les tambours séparateurs réglables (14, 16, 18) sont montés par leurs extrémités, chaque fois dans un actionneur (27, 28) commun et ils sont montés réglables en commun, en hauteur et/ou en distance pour leurs axes par rapport aux tambours séparateurs (13, 15, 17, 19) d'ordre impair.

5. Dispositif selon l'une quelconque des revendications 1 à 4,
caractérisé en ce que
les tambours séparateurs (14, 16, 18), réglables, peuvent être déplacés vers le bas à partir d'un plan commun avec les tambours séparateurs (13, 15, 17, 19) fixes, pour le réglage en hauteur.

6. Dispositif selon l'une quelconque des revendications 1 à 5,
caractérisé en ce que
les tambours séparateurs (14, 16, 18), réglables, sont réglables en hauteur successivement, en commençant par le second tambour séparateur (14), dans la direction d'action (20) du dispositif (6).

7. Dispositif selon l'une quelconque des revendications 3 et 6,
caractérisé en ce que
la distance des axes (26) des tambours séparateurs (14, 16, 18) d'ordre pair par rapport aux tambours séparateurs (13, 15, 17, 19) d'ordre impair, dans la direction d'action (20) du dispositif (6) et dans la direction opposée, est réglable en commun mais également indépendamment du réglage en hauteur par les actionneurs (27, 28).

8. Dispositif selon l'une quelconque des revendications 1, 2, 4, 5, 6,
caractérisé en ce que
les tambours séparateurs (13-19), d'ordre pair et/ou d'ordre impair, sont montés séparément réglables dans la direction d'action (20) du dispositif (6) et dans la direction opposée.

9. Dispositif selon l'une des revendications 1 à 8,
caractérisé en ce que
l'angle d'inclinaison du dispositif (6) par rapport au plan du sol est réglable.

10. Dispositif selon l'une quelconque des revendications 1 à 9,
caractérisé en ce qu'.
un entraînement à chaîne (47) commun avec un dispositif de compensation et de tension (53) est prévu pour tous les tambours séparateurs (13-19).

11. Dispositif selon la revendication 10,
caractérisé en ce que
l'entraînement à chaîne (47) est guidé de manière encapsulée dans une partie du boîtier (12) du dispositif en forme de caisson.

12. Dispositif selon l'une quelconque des revendications 1 à 11,
caractérisé en ce qu'
il appartient à une machine mobile (1) qui comporte un dispositif de réception (5) en amont des tambours séparateurs pour recevoir la terre.

13. Dispositif selon la revendication 12,
caractérisé en ce que
la machine (1) comprend une bande formant tamis (7) en aval des tambours séparateurs.

14. Dispositif selon la revendication 12,
caractérisé en ce que
la bande formant tapis (7) de l'appareil (1) est suivie d'un convoyeur latéral (8) et une grille de débordement (9), passant sur le convoyeur latéral, et une trémie (10) associée à la grille.

15. Dispositif selon l'une quelconque des revendications 1 à 14,
caractérisé en ce que
chaque tambour séparateur (13-19) comprend un axe polygonal (24) et des corps en étoiles (25), juxtaposés sur cet axe polygonal.

16. Dispositif selon la revendication 15,
caractérisé en ce que
l'extrémité de l'axe polygonal (24) des tambours séparateurs (13-19), sur le côté de la chaîne d'entraînement du dispositif (6), est glissée dans une douille de palier (63) et pour le démontage d'un cylindre séparateur on extrait du côté opposé à l'entraînement à chaîne (47).
